# EUROPÄISCHE PATENTSCHRIFT

(11) **EP 3 794 570 B1**
(45) Veröffentlichungstag und Bekanntmachung des Hinweises auf die Patenterteilung: **04.05.2022**
(21) Anmeldenummer: 19739932.2
(22) Anmeldetag: 01.07.2019
(51) Int. Cl.: G08G 1/005, G05D 1/02, B60W 30/09, G08G 1/16

(54) **VERFAHREN ZUM VERHINDERN EINER KOLLISION ZWISCHEN EINEM AUTONOMEN FAHRZEUG UND EINEM NUTZER IN EINEM BEWEGUNGSBEREICH DES AUTONOMEN FAHRZEUGS SOWIE SYSTEM**
METHOD FOR PREVENTING A COLLISION BETWEEN AN AUTONOMOUS VEHICLE AND A USER IN A MOVEMENT RANGE OF THE AUTONOMOUS VEHICLE AND SYSTEM
PROCÉDÉ POUR ÉVITER UNE COLLISION ENTRE UN VÉHICULE AUTONOME ET UN UTILISATEUR DANS UNE ZONE DE DÉPLACEMENT DU VÉHICULE AUTONOME AINSI QUE SYSTÈME

(30) Priorität: 16.07.2018 DE 102018211796
(43) Veröffentlichungstag der Anmeldung: 24.03.2021
(73) Patentinhaber: Siemens Mobility GmbH, 81739 München (DE)
(72) Erfinder: BRÖRING, Arne, 81735 München (DE); ZILLER, Andreas, 82041 Oberhaching (DE); JELL, Thomas, 81739 München (DE)
(86) Internationale Anmeldenummer: PCT/EP2019/067611
(87) Internationale Veröffentlichungsnummer: WO 2020/015995

(56) Entgegenhaltungen:
- US-A1- 2009 043 440
- US-A1- 2015 228 195
- US-A1- 2015 336 502
- US-A1- 2017 345 292
- US-B1- 9 884 585

## Beschreibung

Die vorliegende Erfindung betrifft ein Verfahren zum Verhindern einer Kollision zwischen einem autonomen Fahrzeug und einem Nutzer in einem Bewegungsbereich des autonomen Fahrzeugs. Des Weiteren betrifft die vorliegende Erfindung ein System zum Verhindern einer Kollision zwischen einem autonomen Fahrzeug und einem Nutzer in einem Bewegungsbereich des autonomen Fahrzeugs.

Autonome Fahrzeuge werden immer mehr zur Realität. Im Straßenverkehr versuchen die Hersteller die Autonomie der Kraftfahrzeuge und Lastkraftwagen zu erhöhen. In Lagern und Produktionsstätten sind autonome Fahrzeuge, wie beispielsweise unbemannte Gabelstapler, im produktiven Einsatz, um die Logistikkette zu optimieren. Sowohl im Straßenverkehr als auch im industriellen Umfeld ist die Vermeidung von Kollisionen zwischen diesen autonomen Fahrzeugen und Nutzern beziehungsweise Menschen von höchster Priorität. Dies ist eine entscheidende technische Herausforderung, die es zu lösen gilt.

Die US 2015/228 195 A1 und die US 2017/345 292 A1 haben beispielsweise eine verbesserte Rücksichtnahme auf Fußgänger, welche eine Straße überqueren, zum Inhalt. Die US 2015/228 195 A1 offenbart beispielsweise das Visualisieren eines Fußgängerüberwegs auf der Straße.

Die US 9 884 585 B1 hat das Vergleichen des jeweiligen Pfads eines Fahrzeugs und eines Fußgängers sowie ein Bereitstellen einer Anzeige für den Fußgänger zum Inhalt.

Im Bereich des Straßenverkehrs konzentrieren sich heute die technologischen Lösungen für diese Herausforderung auf die Optimierung der Nutzung von Onboard-Sensoren. Beispielsweise sind Fahrzeuge bekannt, welche Radarsensoren zum Erfassen der Umgebung aufweisen. Sowohl im Straßenverkehr als auch in der industriellen Umgebung ist es bekannt, dass einem Nutzer eine freie Passage oder eine sichere Zone beispielsweise dadurch angezeigt wird, dass das autonome Fahrzeug vor dem Nutzer stehen bleibt. Dabei handelt es sich aber um eine eher implizite Indikation. Im industriellen Umfeld ist es zudem bekannt, Onboard-Signale der autonomen Fahrzeuge zu verwenden, um eine Gefahr anzuzeigen. Beispielsweise werden entsprechende blinkende Lichter an den autonomen Fahrzeugen verwendet. Hierbei handelt es sich aber nur um einen vorbeugenden Schritt.

Es ist Aufgabe der vorliegenden Erfindung, eine Lösung aufzuzeigen, wie eine Kollision zwischen einem autonomen Fahrzeug und einem Nutzer in einem Bewegungsbereich des autonomen Fahrzeugs zuverlässiger verhindert werden kann.

Diese Aufgabe wird erfindungsgemäß durch ein Verfahren sowie durch ein System mit den Merkmalen gemäß den unabhängigen Ansprüchen gelöst. Vorteilhafte Weiterbildungen der vorliegenden Erfindung sind in den abhängigen Ansprüchen angegeben.

Ein erfindungsgemäßes Verfahren dient zum Verhindern einer Kollision zwischen einem autonomen Fahrzeug und einem Nutzer in einem Bewegungsbereich des autonomen Fahrzeugs. Das Verfahren umfasst das Empfangen eines zeitabhängigen, geplanten Pfads des autonomen Fahrzeugs und eines zeitabhängigen, geplanten Pfads des Nutzers. Darüber hinaus beinhaltet das Verfahren das Bestimmen eines zeitabhängigen Pfadnetzwerks mittels einer Pfadnetzwerkeinheit, wobei das zeitabhängige Pfadnetzwerk die geplanten Pfade beschreibt. Zudem umfasst das Verfahren das Bestimmen einer Kollisionsinformation, welche eine Überschneidung der geplanten Pfade in dem zeitabhängigen Pfadnetzwerk beschreibt, sowie das Bestimmen einer sicheren Zone für den Nutzer anhand der Kollisionsinformation, wobei die sichere Zone einen Bereich in dem Bewegungsbereich beschreibt, welcher bezüglich einer Kollision mit dem autonomen Fahrzeug für den Nutzer sicher ist. Schließlich umfasst das Verfahren das Bereitstellen einer Anzeige für den Nutzer mittels einer Anzeigeeinrichtung, wobei die Anzeige die sichere Zone beschreibt.

Mit Hilfe des Verfahrens soll eine Kollision zwischen dem autonomen Fahrzeug und dem Nutzer verhindert werden. Bei dem Nutzer kann es sich insbesondere um einen Menschen handeln, der sich im Bewegungsbereich des autonomen Fahrzeugs befindet. Dieser Bewegungsbereich beschreibt den Bereich, in welchem das autonome Fahrzeug autonom manövriert wird. Zur Durchführung des Verfahrens wird zumindest die Pfadnetzwerkeinheit verwendet. Mittels dieser Pfadnetzwerkeinheit wird ein zeitabhängiges Pfadnetzwerk bestimmt. Dieses zeitabhängige Pfadnetzwerk beschreibt zumindest die geplanten Pfade des autonomen Fahrzeugs und des Nutzers. Die geplanten Pfade des autonomen Fahrzeugs und des Nutzers beschreiben also wie sich das autonome Fahrzeug und der Nutzer in Zukunft bewegen werden. Die jeweiligen geplanten Pfade können beispielsweise entsprechende Wegpunkte entlang des Pfads und dazugehörige Zeitpunkte beschreiben. Anhand der geplanten Pfade kann also ermittelt werden, zu welchem Zeitpunkt sich der Nutzer und das autonome Fahrzeug an welcher Position befinden werden.

Darüber hinaus wird mittels der Pfadnetzwerkeinheit die Kollisionsinformation bestimmt. Diese Kollisionsinformation beschreibt, ob Überschneidungen zwischen den geplanten Pfaden in dem zeitabhängigen Pfadnetzwerk vorhanden sind oder nicht. In Abhängigkeit von dieser Kollisionsinformation kann dann mittels der Pfadnetzwerkeinheit eine sichere Zone oder eine freie Passage bestimmt werden. Diese sichere Zone beschreibt einen Bereich in dem Bewegungsbereich des autonomen Fahrzeugs, welcher bezüglich einer Kollision mit dem autonomen Fahrzeug für den Nutzer sicher ist. Mit anderen Worten findet in dieser sicheren Zone also keine Überschneidung zwischen den geplanten Pfaden statt. In dieser sicheren Zone droht somit keine Kollision zwischen dem autonomen Fahrzeug und dem Nutzer. Auf Grundlage dieser sicheren Zone wird dem Nutzer eine Anzeige bereitgestellt, welche die sichere Zone beschreibt. Mit anderen Worten wird dem Nutzer also die sichere Zone beziehungsweise die freie Passage angezeigt.

Im Vergleich zu bekannten Verfahren zum Verhindern einer Kollision zwischen einem autonomen Fahrzeug und einem Nutzer weist das erfindungsgemäße Verfahren den Vorteil auf, dass die Kollision in einer zentralisierten Weise verhindert wird und die sichere Zone beziehungsweise freie Passagen dem Nutzer explizit signalisiert werden. Diese zentrale Kollisionsprävention erfolgt über den Mechanismus der Verwaltung des zeitabhängigen Pfadnetzwerks mittels der Pfadnetzwerkeinheit. Die explizite Signalisierung erfolgt mittels der Anzeigeeinrichtung, deren Anzeige auf Grundlage der Auswertung des zeitabhängigen Pfadnetzwerks bestimmt wird. Insgesamt kann somit einen Kollision zwischen einem autonomen Fahrzeug und einem Nutzer zuverlässiger verhindert werden.

Erfindungsgemäß werden anhand der Kollisionsinformation zusätzlich eine unsichere Zone, in welcher eine Kollision zwischen dem autonomen Fahrzeug und dem Nutzer droht, und eine Zone der erhöhten Aufmerksamkeit zwischen der sicheren Zone und der unsicheren Zone bestimmt. Ferner werden die unsichere Zone und die Zone der erhöhten Aufmerksamkeit dem Nutzer angezeigt. In diesem Fall kann die sichere Zone dem Nutzer beispielsweise in der Farbe Grün angezeigt werden. Darüber hinaus kann die unsichere Zone in der Farbe Rot angezeigt werden. Die Zone der erhöhten Aufmerksamkeit, welche einen Übergangsbereich zwischen der sicheren Zone und der unsicheren Zone beschreibt, kann beispielsweise in der Farbe Orange angezeigt werden. Somit kann der Nutzer auf einfache Weise wahrnehmen, welchen Weg er zu nehmen hat und ob er sich noch in der sicheren Zone befindet.

Bevorzugt werden die geplanten Pfade von einer Kommunikationseinheit empfangen und an die Pfadnetzwerkeinheit übertragen. Alternativ oder zusätzlich wird die Kollisionsinformation von der Pfadnetzwerkeinheit an die Kommunikationseinheit übertragen. Die Kommunikationseinheit dient einerseits zur Kommunikation mit dem autonomen Fahrzeug und dem Nutzer beziehungsweise einem Endgerät des Nutzers. Dies bedeutet, dass die Kommunikationseinheit Informationen beziehungsweise Signale von dem autonomen Fahrzeug und/oder dem Nutzer empfangen kann und an diese übertragen kann. Beispielsweise kann die Kommunikationseinheit Informationen oder Daten zu den geplanten Pfaden von dem autonomen Fahrzeug und dem Nutzer empfangen. Andererseits dient die Kommunikationseinheit der Kommunikation mit der Pfadnetzwerkeinheit. Die Kommunikationseinheit kann die geplanten Pfade beziehungsweise entsprechende Daten, welche die geplanten Pfade beschreiben, an die Pfadnetzwerkeinheit übertragen. Ferner kann die Kommunikationseinheit die Kollisionsinformation von der Pfadnetzwerkeinheit empfangen. Zudem kann die Kommunikationseinheit dazu ausgebildet sein, die Anzeigeeinrichtung zum Darstellen der Anzeige anzusteuern. Dadurch kann insgesamt eine zuverlässige Kommunikation gewährleistet werden.

In einer Ausführungsform wird zusätzlich zu dem geplanten Pfad des Nutzers eine Reservierung für den geplanten Pfad empfangen und diese Reservierung wird in Abhängigkeit von der Kollisionsinformation bestätigt. Zusammen mit dem geplanten Pfad kann der Nutzer zumindest indirekt die Reservierung an die Kommunikationseinheit übertragen und diese Daten können dann an die Pfadnetzwerkeinheit übertragen werden. Dabei kann die Reservierung den kompletten geplanten Pfad des Nutzers betreffen. Es kann auch vorgesehen sein, dass die Reservierung eine Überschneidung der geplanten Pfade des autonomen Fahrzeugs und des Nutzers betrifft. Falls mittels der Pfadnetzwerkeinheit anhand der Kollisionsinformation erkannt wird, dass für den reservierten Bereich des Pfads keine Kollision droht, kann dieser Reservierung entsprechend bestätigt werden. Zu diesem Zweck kann ein entsprechendes Signal an den Nutzer oder ein Endgerät des Nutzers übertragen werden. Die Reservierungsbestätigung kann auch direkt durch das Anzeigen der sicheren Zone bereitgestellt werden.

In einer weiteren Ausführungsform wird eine Blockierungsinformation an das autonome Fahrzeug übertragen, falls die Kollisionsinformation eine Überschneidung der geplanten Pfade beschreibt, wobei die Blockierungsinformation beschreibt, dass der von dem autonomen Fahrzeug geplante Pfad blockiert ist. Um den Nutzer vor einer Kollision mit dem autonomen Fahrzeug zu schützen, kann diesem eine höhere Priorität zugewiesen werden. Falls anhand der Kollisionsinformation erkannt wird, dass eine Überschneidung der geplanten Pfade vorliegt, kann für die Fahrt des autonomen Fahrzeugs entlang des geplanten Pfads eine Blockierung ausgegeben werden. Auf diese Weise kann eine Kollision zwischen dem autonomen Fahrzeug und dem Nutzer sicher verhinderte werden.

Bevorzugt wird der geplante Pfad des autonomen Fahrzeugs in Abhängigkeit von der Blockierungsinformation geändert und der geänderte Pfad wird an die Pfadnetzwerkeinheit übertragen. Falls das autonome Fahrzeug die Blockierungsinformation empfängt, besteht eine erste Variante darin, dass das autonome Fahrzeug den geplanten Pfad ändert. In diesem Fall wird also ein geänderter Pfad bestimmt, der von dem ursprünglichen geplanten Pfad abweicht. Eine weitere Variante besteht darin, dass das autonome Fahrzeug nach dem Empfangen der Blockierungsinformation die Fahrt auf dem geplanten Pfad durchführt aber die Fahrt entsprechend anpasst. Hierzu kann beispielsweise die Geschwindigkeit des autonomen Fahrzeugs angepasst werden oder das autonome Fahrzeug kann bei der Fahrt entlang des geplanten Pfads entsprechend angehalten werden. Der geänderte zeitabhängige Pfad kann unter Vermittlung der Kommunikationseinheit an die Pfadnetzwerkeinheit übertragen werden. Somit kann die Pfadnetzwerkeinheit das zeitabhängige Pfadnetzwerk auf Grundlage des geänderten Pfads aktualisieren.

Weiterhin ist vorteilhaft, wenn eine Position des autonomen Fahrzeugs und/oder eine Position des Nutzers fortlaufend bestimmt werden und die geplanten Pfade fortlaufend aktualisiert werden. Dazu können beispielsweise entsprechende Sensoren verwendet werden, mittels welchen das autonome Fahrzeug und/oder der Nutzer fortlaufend erfasst werden kann. Anhand der erfassten Positionen kann dann der geplante Pfad des autonomen Fahrzeugs und/oder der geplante Pfad des Nutzers fortlaufend aktualisiert werden und der Pfadnetzwerkeinheit bereitgestellt werden. Somit kann die Pfadnetzwerkeinheit das zeitabhängige Pfadnetzwerk fortlaufend aktualisieren. Ebenso ist es bevorzugt vorgesehen, dass die Kommunikationseinheit mittels der Pfadnetzwerkeinheit fortlaufend bestimmt wird. Somit kann eine Kollision zwischen dem autonomen Fahrzeug und dem Nutzer mit einer hohen Sicherheit verhindert werden.

In einer weiteren Ausführungsform wird der Nutzer über eine mögliche Kollision mit dem autonomen Fahrzeug informiert, falls anhand der Kollisionsinformation erkannt wird, dass sich die geplanten Pfade überschneiden. Es kann vorgesehen sein, dass dem autonomen Fahrzeug, welches sich bewegt, eine höhere Priorität zugeordnet wird als dem Nutzer beziehungsweise dem Menschen, da das autonome Fahrzeug nicht auf einfache Weise zum Stillstand gebracht werden kann. Falls bei einer derartigen Priorisierung des autonomen Fahrzeugs die mögliche Kollision beziehungsweise die Überschneidung der geplanten Pfade erkannt wird, kann eine entsprechende Information an den Nutzer übertragen werden. Der Nutzer kann also informiert werden, dass er mit dem autonomen Fahrzeug kollidieren wird. Grundsätzlich können die Prioritäten beliebig verteilt werden.

Gemäß einer weiteren Ausgestaltung werden mittels der Pfadnetzwerkeinheit Änderungen der geplanten Pfade bestimmt und die Änderungen werden an das autonome Fahrzeug und/oder den Nutzer übertragen. Beispielsweise können die aktuellen Positionen und Ziele des autonomen Fahrzeugs und/oder des Nutzers fortlaufend mittels der Pfadnetzwerkeinheit überwacht werden. Die Pfadnetzwerkeinheit kann auf Grundlage der aktuellen Positionen und/oder der Ziele optimale Pfade für das autonome Fahrzeug und/oder den Nutzer bestimmen. Diese können dann beispielsweise als Vorschlag an den Nutzer und bevorzugt an das autonome Fahrzeug und/oder den Nutzer übertragen werden. Bevorzugt ist es vorgesehen, dass der Vorschlag für einen optimierten Pfad an das autonome Fahrzeug übertragen wird und die Anzeige, welche die sichere Zone beschreibt, und welche dem Nutzer dargestellt wird, entsprechend angepasst wird. Dies ermöglicht eine zuverlässige Prävention einer Kollision zwischen dem autonomen Fahrzeug und dem Nutzer. Zudem können die Pfade der Teilnehmer optimiert werden. Beispielsweise kann mittels der Pfadnetzwerkeinheit bestimmt werden, ob das autonome Fahrzeug schneller an ein Ziel gelangt, wenn es den Pfad ändert oder wenn es sich entlang des geplanten Pfads bewegt und dabei die Fahrt unterbricht.

Bevorzugt wird dem Nutzer als die Anzeige ein virtueller Zebrastreifen angezeigt. Ein solcher virtueller Zebrastreifen oder ein Abbild eines Zebrastreifens kann dem Nutzer in der freien Zone angezeigt werden. Insbesondere wird ein solcher Zebrastreifen an dem Bereich angezeigt, in welchem sich die geplanten Pfade des Nutzers und des autonomen Fahrzeugs überschneiden. Wenn das autonome Fahrzeug beispielsweise auf einem Korridor oder einem Weg bewegt wird, kann der virtuelle Zebrastreifen oder das Abbild des Zebrastreifens auf diesem Weg angezeigt werden. Somit wird dem Nutzer intuitiv vermittelt, dass er den Bereich, in dem der Zebrastreifen angezeigt wird, betreten kann beziehungsweise diesen überqueren kann.

In einer weiteren Ausführungsform ist die Anzeigeeinrichtung Teil eines von dem Nutzer tragbaren Endgeräts. Bei dem tragbaren Endgerät kann es sich beispielsweise um ein Smartphone, um ein Tablet oder dergleichen handeln. Auf diesem Endgerät kann eine entsprechende Applikation zum Ablauf gebracht werden, um die Anzeige bereitzustellen. Auf dieser Anzeigeeinrichtung, die beispielsweise durch einen Bildschirm des Endgeräts gebildet wird, kann ein Abbild des Bewegungsbereichs des autonomen Fahrzeugs dargestellt werden. Zudem kann die Anzeige dargestellt werden. Bei dem tragbaren Endgerät kann es sich um eine VR-Brille, eine Datenbrille oder dergleichen handeln. Das Endgerät kann ein auf dem Kopf des Nutzers getragenes visuelles Ausgabegerät sein.

In einer alternativen Ausführungsform wird die Anzeige auf einen Boden projiziert und/oder die Anzeige wird mittels der Anzeigeeinrichtung auf dem Boden angezeigt. Die Anzeige kann beispielsweise auf den Boden projiziert werden. Hierzu können entsprechende Projektionseinrichtungen verwendet werden, die beispielsweise an einer Decke einer Halle montiert sind. Zudem können die Projektionseinrichtungen an dem autonomen Fahrzeug befestigt sein. Gemäß einer weiteren Ausführungsform kann insbesondere in einer Halle, einem Lager oder einer Fabrik ein Boden vorgesehen sein, auf dem entsprechende Anzeigeelemente vorhanden sind, welche zusammen die Anzeigeeinrichtung bilden. Diese Anzeigeelemente können beispielsweise entsprechende OLED-Displays oder LED-Streifen sein.

Bevorzugt wird das erfindungsgemäße Verfahren in einer Fabrik und/oder in einem Lager durchgeführt. Das Verfahren kann beispielsweise in einer Fabrik beziehungsweise Fertigungshalle genutzt werden, in denen das autonome Fahrzeug zur Unterstützung der Fertigung dient. Bei dem Nutzer kann es sich um einen Fußgänger beziehungsweise Arbeiter handeln, der sich ebenfalls in dieser Fabrik oder in dieser Lagerhalle bewegt. Insbesondere ist das Verfahren also für die industrielle Umgebung geeignet. Ferner kann es vorgesehen sein, dass das Verfahren im Straßenverkehr genutzt wird.

Das Verfahren wurde für ein autonomes Fahrzeug und einen Nutzer beschrieben. Das Verfahren kann ebenso auf mehrere autonome Fahrzeug und/oder mehrere Nutzer erweitert werden.

Ein erfindungsgemäßes dient System zum Verhindern einer Kollision zwischen einem autonomen Fahrzeug und einem Nutzer in einem Bewegungsbereich des autonomen Fahrzeugs. Das System umfasst eine Pfadnetzwerkeinheit zum Empfangen eines zeitabhängigen, geplanten Pfads des autonomen Fahrzeugs und eines zeitabhängigen, geplanten Pfads des Nutzers. Zudem dient die Pfadnetzwerkeinheit zum Bestimmen eines zeitabhängigen Pfadnetzwerks, wobei das zeitabhängige Pfadnetzwerk die geplanten Pfade beschreibt. Darüber hinaus dient die Pfadnetzwerkeinheit zum Bestimmen einer Kollisionsinformation, welche eine Überschneidung der geplanten Pfade in dem zeitabhängigen Pfadnetzwerk beschreibt. Ferner dient die Pfadnetzwerkeinheit zum Bestimmen einer sicheren Zone für den Nutzer anhand der Kollisionsinformation, wobei die sichere Zone einen Bereich in dem Bewegungsbereich beschreibt, welcher bezüglich einer Kollision mit dem autonomen Fahrzeug für den Nutzer sicher ist. Des Weiteren umfasst das System eine Anzeigeeinrichtung zum Bereitstellen einer Anzeige für den Nutzer, wobei die Anzeige die sichere Zone beschreibt. Des Weiteren kann das System eine Kommunikationseinheit umfassen, welche zur Kommunikation beziehungsweise Datenübertragung zwischen dem autonomen Fahrzeug, dem Nutzer beziehungsweise einem Endgerät des Nutzers und der Pfadnetzwerkeinheit dient.

Die mit Bezug auf das erfindungsgemäße Verfahren vorgestellten bevorzugten Ausführungsformen und deren Vorteile gelten entsprechend für das erfindungsgemäße System.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- FIG 1: eine schematische Darstellung einer Lagerhalle, in welcher sich ein autonomes Fahrzeug und ein Nutzer befinden;
- FIG 2: eine schematische Darstellung eines Systems zur Vermeidung einer Kollision zwischen dem autonomen Fahrzeug und dem Nutzer;
- FIG 3: eine schematische Darstellung der zeitabhängigen, geplanten Pfade des autonomen Fahrzeugs und des Nutzers;
- FIG 4: eine beispielhafte Darstellung einer Anzeige auf einem Boden der Fabrik; und
- FIG 5: eine Anzeige auf dem Boden gemäß einer weiteren Ausführungsform.

In den Figuren werden gleiche oder funktionsgleiche Elemente mit den gleichen Bezugszeichen versehen.

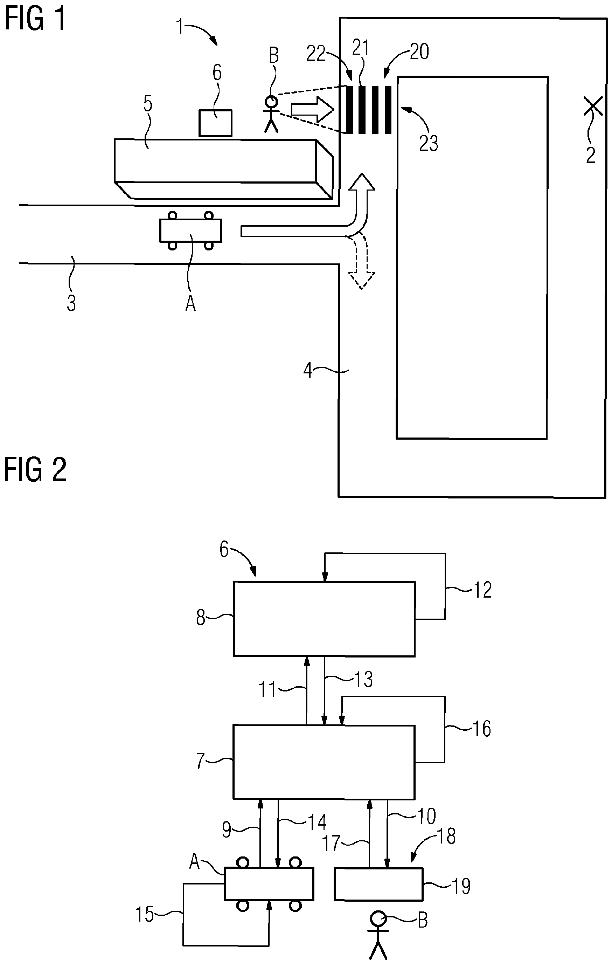

FIG 1 zeigt in schematischer Darstellung eine Fabrik 1, in welcher sich ein autonomes Fahrzeug A und ein Nutzer B befinden. Bei dem autonomen Fahrzeug A kann es sich beispielsweise um einen autonomen Gabelstapler handeln. Bei dem Nutzer B handelt es sich um einen Menschen beziehungsweise einen Fußgänger. Das autonome Fahrzeug A befindet sich auf dem Weg zu einem Ziel 2. Das autonome Fahrzeug A befindet sich vorliegend auf einem ersten Korridor 3 und plant den Weg zu dem Ziel 2 über einen zweiten Korridor 4, wobei es plant, von dem ersten Korridor 3 in den zweiten Korridor 4 nach links abzubiegen. Der Nutzer B möchte diesen zweiten Korridor 4 überqueren. Vorliegend ist dem Nutzer B die Sicht auf das autonome Fahrzeug A durch eine Wand 5 versperrt. Dadurch besteht eine erhöhte Gefahr, dass eine Kollision zwischen dem autonomen Fahrzeug A und dem Nutzer B stattfindet.

Um die Kollision zwischen dem autonomen Fahrzeug A und dem Nutzer B zu vermeiden, wird ein System 6 verwendet. Ein derartiges System 6 ist schematisch in FIG 2 dargestellt. Dieses System 6 umfasst eine Kommunikationseinheit 7, welche einen zeitabhängigen, geplanten Pfad P1 von dem autonomen Fahrzeug A empfängt. Dies ist vorliegen durch den Pfeil 9 veranschaulicht. Darüber hinaus kann die Kommunikationseinheit 7 einen zeitabhängigen, geplanten Pfad P2 von dem Nutzer B empfangen. Dies ist durch den Pfeil 10 veranschaulicht. Zusammen mit dem geplanten Pfad P2 kann der Nutzer B eine Reservierung für seinen geplanten Pfad P2 übermitteln.

Darüber hinaus umfasst das System 6 einen Pfadnetzwerkeinheit 8, welche mit der Kommunikationseinheit 7 zur Datenübertragung verbunden ist. Von der Kommunikationseinheit 7 werden die geplanten Pfade P1, P2 an die Pfadnetzwerkeinheit 8 übertragen (Pfeil 11). Mittels der Pfadnetzwerkeinheit 8 wird ein zeitabhängiges Pfadnetzwerk bestimmt, welches die geplanten Pfade P1, P2 beschreibt. Dies ist durch den Pfeil 12 veranschaulicht. Mittels der Pfadnetzwerkeinheit 8 wird ein Kollisionssignal bestimmt, welches beschreibt, ob zwischen den geplanten Pfaden P1, P2 eine Überschneidung stattfindet.

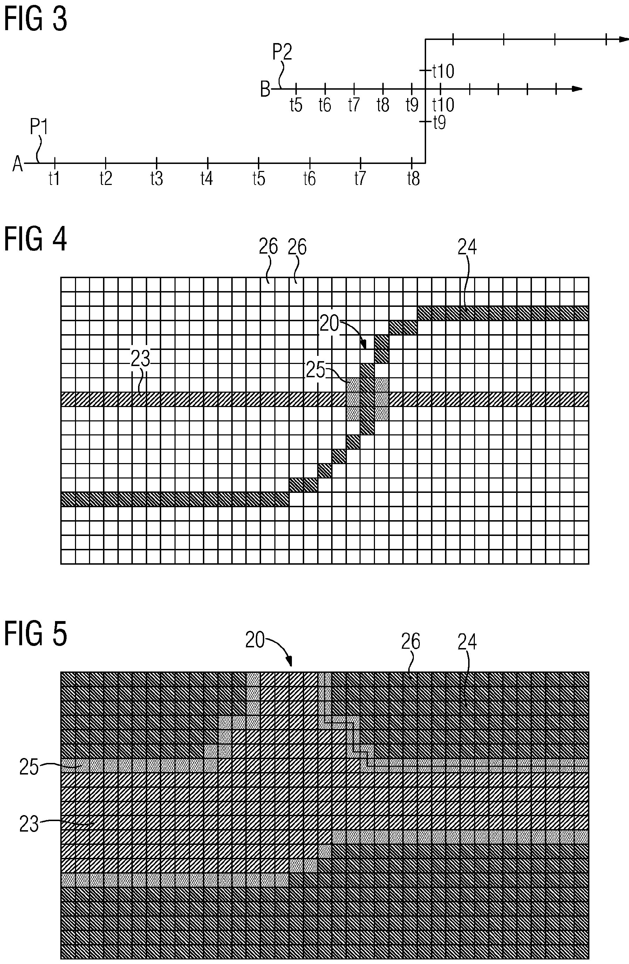

Hierzu zeigt FIG 3 ein Beispiel, welches schematisch den geplanten Pfad P1 des autonomen Fahrzeugs A und den geplanten Pfad P2 des Nutzers B zeigt. Die jeweiligen geplanten Pfade P1, P2 zeigen die jeweiligen Wegpunkte, welche zu den Zeitpunkten t1 bis t10 erreicht werden. Hierbei ist zu erkennen, dass zwischen den Zeitpunkten t9 und t10 eine Überschneidung der Pfade P1 und P2 vorliegt. Die Pfadnetzwerkeinheit 8 überträgt das Kollisionssignal beziehungsweise die Information, dass eine Überschneidung der Pfade P1, P2 vorliegt an die Kommunikationseinheit 7 (Pfeil 13). Da der menschliche Nutzer B eine Priorität gegenüber dem autonomen Fahrzeug A hat, überträgt die Kommunikationseinheit 7 ein Blockierungssignal an das autonome Fahrzeug A sowie den Zeitpunkt der möglichen Kollision in dem Pfadnetzwerk (Pfeil 14) .

Gemäß einer ersten Variante kann das autonome Fahrzeug A den geplanten Pfad P1 ändern beziehungsweise einen geänderten Pfad berechnen. Gemäß dem Beispiel von FIG 1 kann dies dadurch erreicht werden, dass das autonome Fahrzeug A ausgehend von dem ersten Korridor 3 nicht nach links in den zweiten Korridor 4 abbiegt, sondern nach rechts in den zweiten Korridor 4 abbiegt. In diesem Fall wird für das autonome Fahrzeug A ein geänderter Pfad berechnet (Pfeil 15) und an die Kommunikationseinheit 7 und von dort an die Pfadnetzwerkeinheit 8 übertragen. Daraufhin kann das zeitabhängige Pfadnetzwerk mittels der Pfadnetzwerkeinheit 8 aktualisiert werden (Pfeil 16). Hierbei wird erkannt, dass keine Überschneidung zwischen den Pfaden P1 und P2 vorliegt. In diesem Fall kann eine Anzeigeeinrichtung 19, welche dem Nutzer B zugeordnet ist, entsprechend angesteuert werden (Pfeil 17). Zudem kann dem Nutzer die Reservierung es Nutzers B bestätigt werden. Beispielsweise kann die Anzeigeeinrichtung 19 einem Endgerät 18 des Nutzers B zugeordnet sein. Bei dem Endgerät 18 kann es sich um ein Smartphone, eine VR-Brille, eine Datenbrille oder dergleichen handeln. Mittels der Anzeigeeinrichtung 19 kann eine Anzeige 20 bereitgestellt werden, welche dem Nutzer B eine sichere Zone 23 anzeigt. In dieser sicheren Zone 23 droht keine Gefahr für eine Kollision zwischen dem autonomen Fahrzeug A und dem Nutzer B. Vorliegend wird als die Anzeige 20 ein virtueller Zebrastreifen 21 auf dem Boden 22 beziehungsweise dem zweiten Korridor 4 angezeigt.

Gemäß einer weiteren Variante kann das autonome Fahrzeug A auf dem geplanten Pfad P1 bleiben und seine eigene Trajektorie neu berechnen. Beispielsweise kann die Geschwindigkeit, mittels welcher das autonome Fahrzeug A entlang des geplanten Pfads P1 bewegt wird, angepasst werden. Dieser geänderte geplante Pfad kann dann entsprechend an die Kommunikationseinheit 7 und von dort an die Pfadnetzwerkeinheit 8 übertragen werden. Falls das autonome Fahrzeug A seine Geschwindigkeit reduziert oder beispielsweise bei der Fahrt entlang des geplanten Pfads P1 stehen bleibt, droht keine Gefahr einer Kollision mit dem Nutzer B. Dies kann bei der Überprüfung des zeitabhängigen Pfadnetzwerks mittels der Pfadnetzwerkeinheit 8 erkannt werden. In diesem Fall wird dem Nutzer B die Anzeige 20 bereitgestellt.

Die jeweiligen Pfade P1, P2 können von dem autonomen Fahrzeug A und dem Nutzer B vorgegeben werden. Es kann auch vorgesehen sein, dass die jeweiligen Positionen des autonomen Fahrzeugs A und des Nutzers B fortlaufend mit entsprechenden Sensoren, beispielsweise Radarsensoren oder Infrarotsensoren, erfasst werden. Ferner können Bewegungen des autonomen Fahrzeugs A und des Nutzers B fortlaufend an die Pfadnetzwerkeinheit 7 übertragen werden. Abweichungen von den geplanten Pfaden P1, P2 können dann erkannt und dem autonomen Fahrzeug A und dem Nutzer B mitgeteilt werden. Ferner kann es vorgesehen sein, dass Prioritäten bezüglich eines Wegrechts flexibel vorgegeben werden. Beispielsweise kann dem autonomen Fahrzeug A eine höhere Priorität zugeordnet werden als dem menschlichen Nutzer B, da das autonome Fahrzeug A nicht einfach bremsen kann. In diesem Fall kann der Nutzer B darüber informiert werden, dass eine Kollision mit dem autonomen Fahrzeug A stattfinden kann.

Moderne Fabriken werden Grundrisse haben, auf denen bodengebundene Fahrzeuge, Roboter und sogar Produktionseinheiten mobil und autonom bewegt werden. In einer weiteren Ausführungsform kann die sichere Zone 23 auf dem Boden 22 angezeigt werden. Darüber hinaus können unsichere Zonen 24 auf dem Boden 22 angezeigt werden. Beispielsweise können die sicheren Zonen 23 als grüne Line und die unsicheren Zonen 24 als rote Linie angezeigt werden. Eine solche Anzeige 20 könnte beispielsweise durch eine entsprechende Projektion mit Projektionselementen realisiert werden. Beispielsweise könnten entsprechende Laser an der Decke der Fabrik 1 angeordnet werden. Alternativ dazu könnten leuchtende Bodenfliesen 26, welche beispielsweise durch OLED-Matrizen oder LED-Bänder bereitgestellt werden, genutzt werden. Hierzu zeigt FIG 4 ein Beispiel, bei welcher der Boden 22 der Fabrik 1 mit beleuchteten Bodenfliesen 26 bedeckt ist. Hierbei sind für die geplanten Pfade P1, P2 die sichere Zone 23 sowie die unsichere Zone 24 angezeigt. Zudem ist eine Zone 25 erhöhter Aufmerksamkeit dargestellt. Diese Zone der erhöhten Aufmerksamkeit 25 kann beispielsweise in der Farbe Orange angezeigt werden. Durch diese Anzeigen kann der Nutzer auf intuitive Weise darauf hingewiesen werden, wo er sich sicher bewegen kann und an welchen Stellen gegebenenfalls eine Kollision mit einem autonomen Fahrzeug A droht.

Es kann auch vorgesehen sein, dass die Positionen und Ziele des autonomen Fahrzeugs und des Nutzers kontinuierlich aufgezeichnet werden. Mittels der Pfadnetzwerkeinheit 8 können dann die optimalen Routen berechnet werden und diese beispielsweise an die nicht-menschlichen Teilnehmer übertragen werden. Dabei können die Bodenfliesen 26 für die menschlichen Teilnehmer beleuchtet werden.

FIG 5 zeigt ein weiteres Beispiel, bei welchem sichere Zonen 23 und unsicheren Zonen 24 sowie Zonen erhöhter Aufmerksamkeit 25 dynamisch angezeigt werden. Dies kann auch unabhängig von den geplanten Pfaden P1, P2 erfolgen. Dabei sind die Zonen erhöhter Aufmerksamkeit 25 als Übergangsbereiche zwischen den sichere Zonen 23 und den unsicheren Zonen 24 angezeigt. In Kombination mit Arbeitsbereichen für Menschen und Arbeitsbereichen für Maschinen kann die Pfadnetzwerkeinheit die Bereiche bestimmen, welche für menschliche Nutzer B sicher sind.

Mit Hilfe des Systems 6 und insbesondere der Pfadnetzwerkeinheit 8 wird eine zentrale Steuereinheit bereitgestellt, welche die geplanten Pfade P1, P2 überwacht und mittels welcher Pfade blockiert werden können und dem Nutzer B virtuelle Zebrastreifen 21 angezeigt werden können. Diese Anzeige 20 beziehungsweise der virtuelle Zebrastreifen 21 kann dem Nutzer B auf seinem Smartphone oder einem VR-Gerät angezeigt werden. Ferner kann eine Anzeige der Infrastruktur genutzt werden. Somit ergibt sich der Vorteil, dass zur Kollisionsvermeidung zwischen dem autonomen Fahrzeug A und dem Nutzer B nicht nur ausschließlich Onboard-Sensoren genutzt werden, sondern die zentralisierte Einheit in Form der Pfadnetzwerkeinheit 7. Durch die Anzeige des virtuellen Zebrastreifens 21 kann dem Nutzer B explizit angezeigt werden, dass ein sicheres Überqueren des Korridors 4 oder einer Straße möglich ist. Somit kann dem Nutzer ein sicheres Gefühl im Vergleich zu impliziten Signalen, beispielsweise Warnlichtern an autonomen Gabelstaplern vermittelt werden. Die Überprüfung der Pfade P1, P2 und die Vorhersage der Pfade P1, P2 von der Pfadnetzwerkeinheit 8 ermöglicht eine optimale Anpassung der Routen um Verzögerungen zu vermeiden. Beispielsweise kann ein autonomes Fahrzeug A das Ziel 2 schneller erreichen, wenn es eine andere Route auswählt und eine Verzögerung aufgrund eines Stopps vermeidet.

## Patentansprüche

1. Verfahren zum Verhindern einer Kollision zwischen einem autonomen Fahrzeug (A) und einem Nutzer (B) in einem Bewegungsbereich des autonomen Fahrzeugs mit den Schritten:
- Empfangen eines zeitabhängigen, geplanten Pfads (P1) des autonomen Fahrzeugs (A) und eines zeitabhängigen, geplanten Pfads (P2) des Nutzers (B),
- Bestimmen eines zeitabhängigen Pfadnetzwerks mittels einer Pfadnetzwerkeinheit (8), wobei das zeitabhängige Pfadnetzwerk die geplanten Pfade (P1, P2) beschreibt,
- Bestimmen einer Kollisionsinformation, welche eine Überschneidung der geplanten Pfade (P1, P2) in dem zeitabhängigen Pfadnetzwerk beschreibt,
- Bestimmen einer sicheren Zone (23) für den Nutzer anhand der Kollisionsinformation, wobei die sichere Zone (23) einen Bereich in dem Bewegungsbereich beschreibt, welcher bezüglich einer Kollision mit dem autonomen Fahrzeug (A) für den Nutzer (B) sicher ist, und
- Bereitstellen einer Anzeige (20) für den Nutzer (B) mittels einer Anzeigeeinrichtung (19), wobei die Anzeige (20) die sichere Zone (23) beschreibt, **dadurch gekennzeichnet, dass**
- anhand der Kollisionsinformation zusätzlich eine unsichere Zone (24), in welcher eine Kollision zwischen dem autonomen Fahrzeug (A) und dem Nutzer (B) droht, und eine Zone der erhöhten Aufmerksamkeit (25) zwischen der sicheren Zone (23) und der unsicheren Zone (24) bestimmt werden und die unsichere Zone (24) und die Zone der erhöhten Aufmerksamkeit (25) dem Nutzer (B) angezeigt werden.

2. Verfahren nach Anspruch 1, wobei die geplanten Pfade (P1, P2) von einer Kommunikationseinheit (7) empfangen werden und an die Pfadnetzwerkeinheit (8) übertragen werden und/oder dass die Kollisionsinformation von der Pfadnetzwerkeinheit (8) an die Kommunikationseinheit (7) übertragen wird.

3. Verfahren nach Anspruch 1 oder 2, wobei zusätzlich zu dem geplanten Pfad (P2) des Nutzers (B) eine Reservierung für den geplanten Pfad (P2) empfangen wird und diese Reservierung in Abhängigkeit von der Kollisionsinformation bestätigt wird.

4. Verfahren nach einem der vorhergehenden Ansprüche, wobei eine Blockierungsinformation an das autonome Fahrzeug (A) übertragen wird, falls die Kollisionsinformation eine Überschneidung der geplanten Pfade (P1, P2) beschreibt, wobei die Blockierungsinformation beschreibt, dass der von dem autonomen Fahrzeug (A) geplante Pfad (P1) blockiert ist.

5. Verfahren nach Anspruch 4, wobei der geplante Pfad (P1) des autonomen Fahrzeugs (A) in Abhängigkeit von der Blockierungsinformation geändert wird und der geänderte Pfad an die Pfadnetzwerkeinheit (8) übertragen wird.

6. Verfahren nach einem der vorhergehenden Ansprüche, wobei eine Position des autonomen Fahrzeugs (A) und/oder eine Position des Nutzers (B) fortlaufend bestimmt wird und die geplanten Pfade (P1, P2) fortlaufend aktualisiert werden.

7. Verfahren nach einem der vorhergehenden Ansprüche, wobei der Nutzer (B) über eine mögliche Kollision mit dem autonomen Fahrzeug (A) informiert wird, falls anhand der Kollisionsinformation erkannt wird, dass sich die geplanten Pfade (P1, P2) überschneiden.

8. Verfahren nach einem der vorhergehenden Ansprüche, wobei mittels der Pfadnetzwerkeinheit (8; Änderungen der geplanten Pfade (P1, P2) bestimmt werden und die Änderungen an das autonome Fahrzeug (A) und/oder den Nutzer (B) übertragen werden.

9. Verfahren nach einem der vorhergehenden Ansprüche, wobei dem Nutzer als die Anzeige ein virtueller Zebrastreifen (21) angezeigt wird.

10. Verfahren nach einem der vorhergehenden Ansprüche, wobei die Anzeigeeinrichtung (19) Teil eines von dem Nutzer tragbaren Endgeräts (18) ist.

11. Verfahren nach einem der vorhergehenden Ansprüche, wobei die Anzeige (20) auf einen Boden (22) projiziert wird und/oder die Anzeige (20) mittels der Anzeigeeinrichtung auf dem Boden (22) angezeigt wird.

12. Verfahren nach einem der vorhergehenden Ansprüche, wobei das Verfahren in einer Fabrik (1) und/oder in einem Lager durchgeführt wird.

13. System (6) zum Verhindern einer Kollision zwischen einem autonomen Fahrzeug (A) und einem Nutzer (B) in einem Bewegungsbereich des autonomen Fahrzeugs (A), umfassend:
- eine Pfadnetzwerkeinheit (8) zum Empfangen eines zeitabhängigen, geplanten Pfads (P1) des autonomen Fahrzeugs (A) und eines zeitabhängigen, geplanten Pfads (P2) des Nutzers (B), zum Bestimmen eines zeitabhängigen Pfadnetzwerks, wobei das zeitabhängige Pfadnetzwerk die geplanten Pfade (P1, P2) beschreibt, zum Bestimmen einer Kollisionsinformation, welche eine Überschneidung der geplanten Pfade (P1, P2) in dem zeitabhängigen Pfadnetzwerk beschreibt, und zum Bestimmen einer sicheren Zone (23) für den Nutzer anhand der Kollisionsinformation, wobei die sichere Zone (23) einen Bereich in dem Bewegungsbereich beschreibt, welcher bezüglich einer Kollision mit dem autonomen Fahrzeug (A) für den Nutzer (B) sicher ist, und
- eine Anzeigeeinrichtung (19) zum Bereitstellen einer Anzeige (20) für den Nutzer, wobei die Anzeige (20) die sichere Zone (23) beschreibt, **dadurch gekennzeichnet, dass**
- das System (6) ausgebildet ist, anhand der Kollisionsinformation zusätzlich eine unsichere Zone (24), in welcher eine Kollision zwischen dem autonomen Fahrzeug (A) und dem Nutzer (B) droht, und eine Zone der erhöhten Aufmerksamkeit (25) zwischen der sicheren Zone (23) und der unsicheren Zone (24) zu bestimmen und die unsichere Zone (24) und die Zone der erhöhten Aufmerksamkeit (25) dem Nutzer (B) anzuzeigen.

## Claims

1. Method for preventing a collision between an autonomous vehicle (A) and a user (B) in a movement range of the autonomous vehicle, comprising the steps:
- receiving a time-dependent, planned path (P1) of the autonomous vehicle (A) and a time-dependent, planned path (P2) of the user (B),
- determining a time-dependent path network by means of a path network unit (8), wherein the time-dependent path network describes the planned paths (P1, P2),
- determining collision information which describes an overlap of the planned paths (P1, P2) in the time-dependent path network,
- determining a safe zone (23) for the user on the basis of the collision information, wherein the safe zone (23) describes an area in the movement range which is safe for the user (B) with respect to a collision with the autonomous vehicle (A), and
- providing a display (20) for the user (B) by means of a display device (19), wherein the display (20) describes the safe zone (23), **characterized in that**
- in addition an unsafe zone (24), in which there is a risk of a collision between the autonomous vehicle (A) and the user (B), and a zone of increased attention (25) between the safe zone (23) and the unsafe zone (24) are determined on the basis of the collision information, and the unsafe zone (24) and the zone of increased attention (25) are displayed to the user (B).

2. Method according to Claim 1, wherein the planned paths (P1, P2) are received by a communication unit (7) and are transmitted to the path network unit (8), and/or in that the collision information is transmitted from the path network unit (8) to the communication unit (7).

3. Method according to Claim 1 or 2, wherein in addition to the planned path (P2) of the user (B) a reservation for the planned path (P2) is received, and this reservation is confirmed in accordance with the collision information.

4. Method according to one of the preceding claims, wherein blocking information is transmitted to the autonomous vehicle (A) if the collision information describes an overlap of the planned paths (P1, P2), wherein the blocking information describes that the path (P1) which is planned by the autonomous vehicle (A) is blocked.

5. Method according to Claim 4, wherein the planned path (P1) of the autonomous vehicle (A) is changed in accordance with the blocking information, and the changed path is transmitted to the path network unit (8).

6. Method according to one of the preceding claims, wherein a position of the autonomous vehicle (A) and/or a position of the user (B) are/is determined continuously, and the planned paths (P1, P2) are updated continuously.

7. Method according to one of the preceding claims, wherein the user (B) is informed about a possible collision with the autonomous vehicle (A) if it is detected on the basis of the collision information that the planned paths (P1, P2) overlap.

8. Method according to one of the preceding claims, wherein changes to the planned paths (P1, P2) are determined by means of the path network unit (8), and the changes are transmitted to the autonomous vehicle (A) and/or the user (B).

9. Method according to one of the preceding claims, wherein a virtual crosswalk (21) is displayed as the display to the user.

10. Method according to one of the preceding claims, wherein the display device (19) is part of a terminal (18) which can be carried by the user.

11. Method according to one of the preceding claims, wherein the display (20) is projected onto a floor (22), and/or the display (20) is displayed on the floor (22) by means of the display device.

12. Method according to one of the preceding claims, wherein the method is carried out in a factory (1) and/or in a warehouse.

13. System (6) for preventing a collision between an autonomous vehicle (A) and a user (B) in a movement range of the autonomous vehicle (A), comprising:
- a path network unit (8) for receiving a time-dependent, planned path (P1) of the autonomous vehicle (A) and a time-dependent, planned path (P2) of the user (B), in order to determine a time-dependent path network, wherein the time-dependent path network describes the planned paths (P1, P2), in order to determine collision information which describes an overlap of the planned paths (P1, P2) in the time-dependent path network, and in order to determine a safe zone (23) for the user on the basis of the collision information, wherein the safe zone (23) describes an area in the movement range which is safe for the user (B) with respect to a collision with the autonomous vehicle (A), and
- a display device (19) for providing a display (20) for the user, wherein the display (20) describes the safe zone (23), **characterized in that**
- the system (6) is designed in addition to determine an unsafe zone (24), in which there is a risk of a collision between the autonomous vehicle (A) and the user (B), and a zone of increased attention (25) between the safe zone (23) and the unsafe zone (24) on the basis of the collision information, and to display the unsafe zone (24) and the zone of increased attention (25) to the user (B) .

## Revendications

1. Procédé destiné à éviter une collision entre un véhicule autonome (A) et un utilisateur (B) dans une zone de déplacement du véhicule autonome avec les étapes de :
- réception d'un parcours planifié (P1) dépendant du temps du véhicule autonome (A) et d'un parcours planifié (P2) dépendant du temps de l'utilisateur (B),
- détermination d'un réseau de parcours (8) dépendant du temps au moyen d'une unité de réseau de parcours (8), dans lequel le réseau de parcours dépendant du temps décrit les parcours planifiés (P1, P2),
- détermination d'une information de collision qui décrit un chevauchement des parcours planifiés (P1, P2) dans le réseau de parcours dépendant du temps,
- détermination d'une zone sûre (23) pour l'utilisateur à l'aide de l'information de collision, dans lequel la zone sûre (23) décrit une zone dans la zone de déplacement qui est sûre pour l'utilisateur (B) par rapport à une collision avec le véhicule autonome (A), et
- mise à disposition d'une visualisation (20) pour l'utilisateur (B) au moyen d'un dispositif de visualisation (19), dans lequel la visualisation (20) décrit la zone sûre (23), **caractérisé en ce que**
- à l'aide de l'information de collision une zone non sûre (24), dans laquelle une collision entre le véhicule autonome (A) et l'utilisateur (B) est proche, et une zone de vigilance accrue (25) entre la zone sûre (23) et la zone non sûre (24) sont déterminées et la zone non sûre (24) et la zone de vigilance accrue (25) sont en outre affichées au profit de l'utilisateur (B) .

2. Procédé selon la revendication 1, dans lequel les parcours planifiés (P1, P2) sont reçus par une unité de communication (7) et sont transmis à l'unité de réseau de parcours (8) et/ou en ce que l'information de collision est transmise de l'unité de réseau de parcours (8) à l'unité de communication (7) .

3. Procédé selon la revendication 1 ou 2, dans lequel en plus du parcours planifié (P2) de l'utilisateur (B) une réservation pour le parcours planifié (P2) est reçue et cette réservation est confirmée en fonction de l'information de collision.

4. Procédé selon l'une quelconque des revendications précédentes, dans lequel une information de blocage est transmise au véhicule autonome (A) dans le cas où l'information de collision décrit une intersection des parcours planifiés (P1, P2), dans lequel l'information de blocage décrit que le parcours (P1) planifié par le véhicule autonome (A) est bloqué.

5. Procédé selon la revendication 4, dans lequel le parcours planifié (P1) du véhicule autonome (A) est modifié en fonction de l'information de blocage et le parcours modifié est transmis à l'unité de réseau de parcours (8).

6. Procédé selon l'une quelconque des revendications précédentes, dans lequel une position du véhicule autonome (A) et/ou une position de l'utilisateur (B) sont déterminées en permanence et les parcours planifiés (P1, P2) sont mis à jour en permanence.

7. Procédé selon l'une quelconque des revendications précédentes, dans lequel l'utilisateur (B) est informé d'une possible collision avec le véhicule autonome (A) dans le cas où il est reconnu à l'aide de l'information de collision que les parcours planifiés (P1, P2) se chevauchent.

8. Procédé selon l'une quelconque des revendications précédentes, dans lequel au moyen de l'unité de réseaux de parcours (8) des modifications des parcours planifiés (P1, P2) sont déterminées et les modifications sont transmises au véhicule autonome (A) et/ou à l'utilisateur (B).

9. Procédé selon l'une quelconque des revendications précédentes, dans lequel un passage piéton virtuel (21) est affiché en tant que visualisation au profit de l'utilisateur.

10. Procédé selon l'une quelconque des revendications précédentes, dans lequel le dispositif de visualisation (19) est une partie d'un terminal (18) portable par l'utilisateur.

11. Procédé selon l'une quelconque des revendications précédentes, dans lequel la visualisation (20) est projetée sur un sol (22) et/ou la visualisation (20) est affichée sur le sol (22) au moyen du dispositif de visualisation.

12. Procédé selon l'une quelconque des revendications précédentes, dans lequel le procédé est réalisé dans un site de production (1) et/ou dans un entrepôt.

13. Système (6) destiné à éviter une collision entre un véhicule autonome (A) et un utilisateur (B) dans une zone de déplacement du véhicule autonome (A), comprenant :
- une unité de réseau de parcours (8) destinée à recevoir un parcours planifié (P1) dépendant du temps du véhicule autonome (A) et un parcours planifié (P2) dépendant du temps de l'utilisateur (B), destinée à déterminer un réseau de parcours dépendant du temps, dans lequel le réseau de parcours dépendant du temps décrit les parcours planifiés (P1, P2), destinée à déterminer une information de collision, qui décrit un chevauchement des parcours planifiés (P1, P2) dans le réseau de parcours dépendant du temps, et destinée à déterminer une zone sûre (23) pour l'utilisateur à l'aide de l'information de collision, dans lequel la zone sûre (23) décrit une zone dans la zone de déplacement, qui est sûre par rapport à une collision avec le véhicule autonome (A) pour l'utilisateur (B), et
- un dispositif de visualisation (19) destiné à la mise à disposition d'une visualisation (20) pour l'utilisateur, dans lequel la visualisation (20) décrit la zone sûre (23), **caractérisé en ce que**
- le système (6) est configuré pour déterminer à l'aide de l'information de collision en outre une zone non sûre (24), dans laquelle une collision est proche entre le véhicule autonome (A) et l'utilisateur (B), et une zone de vigilance accrue (25) entre la zone sûre (23) et la zone non sûre (24) et afficher la zone non sûre (24) et la zone de vigilance accrue (25) au profit de l'utilisateur (B).
